# EUROPÄISCHE PATENTSCHRIFT

(11) **EP 2 107 975 B1**
(45) Veröffentlichungstag und Bekanntmachung des Hinweises auf die Patenterteilung: **29.12.2010**
(21) Anmeldenummer: 08735491.6
(22) Anmeldetag: 26.03.2008
(51) Int. Cl.: B60J 10/02, B60J 10/04

(54) **VERFAHREN ZUR HERSTELLUNG EINER DICHTUNGSANORDNUNG, INSBESONDERE FÜR EIN KRAFTFAHRZEUG, UND EINE SOLCHE DICHTUNGSANORDNUNG**
METHOD FOR PRODUCING A SEALING ARRANGEMENT, PARTICULARLY FOR A MOTOR VEHICLE, AND A SEALING ARRANGEMENT
PROCEDE DE FABRICATION D'UN SYSTEME D'ETANCHEITE, NOTAMMENT POUR UN VEHICULE A MOTEUR, ET SYSTEME D'ETANCHEITE DE CE TYPE

(30) Priorität: 30.03.2007 DE 102007015464
(43) Veröffentlichungstag der Anmeldung: 14.10.2009
(73) Patentinhaber: METZELER Automotive Profile Systems GmbH, 88131 Lindau (DE)
(72) Erfinder: BURGER, Reinhold, 88285 Bodnegg (DE); HOFMAIER, Stefan, 88131 Lindau (DE)
(74) Vertreter: Schober, Christoph D.
(86) Internationale Anmeldenummer: PCT/EP2008/053579
(87) Internationale Veröffentlichungsnummer: WO 2008/119707

(56) Entgegenhaltungen:
- EP-A- 0 792 766
- EP-A- 1 526 241
- WO-A-2006/067622
- DE-A1- 19 543 971

## Beschreibung

Die vorliegende Erfindung betrifft ein Verfahren zur Herstellung einer Dichtungsanordnung, insbesondere für ein Kraftfahrzeug, wobei die Dichtungsanordnung ein erstes Dichtungselement, ein zweites Dichtungselement und einen Träger umfasst. Die Erfindung betrifft ferner eine solche Dichtungsanordnung.

Kraftfahrzeuge weisen häufig Türen auf die sowohl mit einer heb- und senkbaren als auch mit einer feststehenden Fensterscheibe ausgestattet sind. Um sowohl die feststehende Fensterscheibe als auch die bewegliche Fensterscheibe abdichten zu können, ist häufig ein Steg zwischen diesen Fensterscheiben vorgesehen, an dem eine Dichtungsanordnung zur Abdichtung und Führung der beweglichen Fensterscheibe und zur Abdichtung und Halterung der feststehenden Fensterscheibe angebracht ist. Herkömmlicherweise gestaltet sich ein Herstellungsverfahren für eine derartige Dichtungsanordnung sehr aufwendig. Insbesondere war es bisher erforderlich eine derartige Dichtungsanordnung in mehreren aufeinander folgenden Einzelverfahren herzustellen. So wurden bisher mehrere Dichtungselemente separat hergestellt und bei der Endmontage an der Tür angebracht. Üblicherweise wird eines der Dichtungselemente mittels Spritzgießen hergestellt, wobei ein Metallträger angespritzt wird. Hierbei bilden sich häufig Luftblasen an der Kontaktfläche von Träger und Spritzgießmasse. Ferner war es häufig erforderlich, ein separates Dichtungselement für die bewegliche Fensterscheibe zu erwärmen und zu biegen. Hier ergaben sich häufig Ausbeulungen.

Eine Dichtung und ein Herstellungsverfahren für eine Dichtung werden in der WO 2006/067622 A1 beschrieben. Die Dichtung umfasst ein Querstück, das den Fensterrahmen der Tür eines Kraftfahrzeugs derart in zwei Bereiche aufteilt, dass eine feststehende Fensterscheibe und eine bewegliche Fensterscheibe aufgenommen werden. Die Dichtung umfasst zudem ein Dichtungsprofil, eine Trennstütze und einen aus hartem Gummi, Metall oder Kunststoff bestehenden Steg. Sowohl in das Dichtungsprofil als auch in die Trennstütze sind Kanäle eingebracht, die einerseits die bewegliche Fensterscheibe und andererseits die feststehende Fensterscheibe aufnehmen. Zur Herstellung der Dichtung wird das Dichtungsprofil an dem Steg formschlüssig befestigt, und anschließend wird die Trennstütze stoffschlüssig an das Dichtungsprofil und den Steg angegossen. Zur Herstellung des Querstücks wird das Dichtungsprofil an dem Steg befestigt und anschließend in eine Gussform zusammen mit der feststehenden Fensterscheibe eingebracht. Danach wird die Trennstütze angegossen.

Weiterhin ist aus der DE 195 43 971 A1 ein Element zur Befestigung einer Profildichtung bekannt. Dieses Befestigungselement weist eine Metallklammer und ein U-förmiges Kunststoffteil, das eine Nut ausbildet, in welche ein Blech eingeführt wird, auf. Zwischen dem Kunststoffteil und der Metallklammer sind Hohlräume ausgebildet, die ausgespritzt und anschließend vulkanisiert werden.

Darüber hinaus offenbart die EP 0 792 766 A1 eine Zierleiste für ein Kraftfahrzeug, die eine Profilleiste, die formschlüssig mit einem Scheibenführungskanal verbunden ist, und einen elastomeren Ring, der stoffschlüssig mit der Profilleiste verbunden ist, umfasst. Zur Herstellung des elastomeren Rings wird die Profilleiste in eine Gussform eingesetzt und anschließend mit einem elastomeren Material ausgespritzt. Der Scheibenführungskanal wird formschlüssig in einen von der Profilleiste ausgebildeten Kanal eingesetzt.

Der Erfindung liegt die Aufgabe zugrunde, ein Verfahren zur Herstellung einer Dichtungsanordnung, insbesondere für ein Kraftfahrzeug, anzugeben, so dass sich die Dichtungsanordnung auf einfache Weise in wenigen Verfahrensschritten herstellen lässt.

Diese Aufgabe wird durch ein Verfahren gemäß Anspruch 1 und eine Dichtungsanordnung gemäß Anspruch 7 gelöst. Bevorzugte Ausgestaltungen der Erfindung werden in den Ansprüchen 2 bis 6 und 8 bis 16 definiert.

Das erfindungsgemäße Verfahren beruht auf der Erkenntnis, das erste Dichtungselement zusammen mit dem Träger in dem Spritzgießwerkzeug derart zu positionieren, dass ein die Form des zweiten Dichtungselements bestimmende Hohlraum entsteht beziehungsweise verbleibt und anschließend die Spritzgießmasse in den Hohlraum derart eingebracht wird, dass das zweite Dichtungselement geformt und zugleich mit dem Träger verbunden wird. Diese Verbindung entsteht vorzugsweise durch Stoffschluss. Nach Vulkanisieren der Spritzgießmasse kann die fertig gestellte Dichtungsanordnung aus dem Spritzgießwerkzeug entnommen werden und beispielsweise an einer Kraftfahrzeugtür montiert werden.

Auf diese Weise kann die Dichtungsanordnung unter Bereitstellung des Trägers und des ersten vorzugsweise extrudierten Dichtungselements in einem Verfahrensschritt schnell und einfach hergestellt werden. Zudem kann durch die Formgebung des zweiten Dichtungselements auch ein zusätzlicher Halt für das erste Dichtungselement in seiner Position relativ zum Träger ermöglicht werden. Insbesondere kann die Spritzgießmasse auch derart eingebracht werden, dass neben einer stoffschlüssigen Verbindung von Träger und zu erstellendem zweiten Dichtungselement zugleich eine stoffschlüssige Verbindung mit dem ersten Dichtungselement hergestellt wird. Auf diese Weise wird eine zusätzliche Fixierung der Elemente der Dichtungsanordnung geschaffen.

Die mit den erfindungsgemäßen Verfahren hergestellte Dichtungsanordnung wird insbesondere zur Halterung, Führung und Abdichtung einer beweglichen sowie einer feststehenden Fensterscheibe einer Kraftfahrzeugtür eingesetzt. Als Spritzgießmasse wird vorzugsweise ein elastomerer Werkstoff verwendet.

Erfindungsgemäß wird ein die Form des zweiten Dichtungselements bestimmender Formkern in dem Spritzgießwerkzeug positioniert. Auf diese Weise kann der Spritzgießvorgang zugleich dazu herangezogen werden, einen geeigneten Aufnahmekanal zur späteren Festlegung einer vorzugsweise feststehenden Fensterscheibe auszubilden. Hierbei kann der Kanal mit einer entsprechend geformten Innenwandung ausgebildet werden, so dass sich die Fensterscheibe in den Kanal einführen lässt, aber nicht ohne weiteres herausziehen lässt. Dies wird vorteilhafterweise dadurch erreicht, dass die Innenwandung Erhebungen und/oder Vorsprünge aufweist.

Erfindungsgemäß wird ferner der Formkern wenigstens abschnittsweise an dem Träger angelegt. In bevorzugter Ausgestaltung erstreckt sich der Träger und der Hohlraum beziehungsweise das Dichtungselement entlang einer Längsrichtung. Hierbei kann der sich vorteilhafterweise ebenfalls entlang dieser Längsrichtung erstreckende Formkern abschnittsweise beziehungsweise punktuell an dem Träger angelegt werden kann. Auf diese Weise wird der Träger über den Formkern zusätzlich in dem Spritzgießwerkzeug gehalten. Ferner ermöglicht ein im Querschnitt betrachtet variabel entlang der Längsrichtung gestalteter Formkern zwischen den anliegenden Abschnitten eine geeignete Ausbildung des Kanals zur späteren Aufnahme der Fensterscheibe. Vorzugsweise sind diese Anlageabschnitte des Formkerns in Längsrichtung äquidistant beabstandet. Auf diese Weise lässt sich entlang der Längsrichtung des Spritzgießwerkzeugs eine zusätzliche Positionierung und Fixierung des Trägers innerhalb des Werkzeughohlraums erreichen. Zudem ermöglicht eine entsprechend gestaltete Außenfläche des Formkerns die Ausbildung einer Erhebung oder eines Anschlages für die in den Kanal eingeführte Fensterscheibe oder dient zur Ausbildung eines geeignet geformten Grunds des Aufnahmekanals.

Bei einer bevorzugten Weiterbildung wird die Spritzgießmasse derart eingebracht, dass das zweite Dichtungselement zusätzlich mit dem ersten Dichtungselement verbunden wird. So kann eine zusätzliche Fixierung des ersten Dichtungselements an dem Träger erreicht werden. Es wird eine in sich kompakte Dichtungsanordnung mit sicherem gegenseitigem Halt der einzelnen Bestandteile geschaffen.

Das Positionieren des ersten Dichtungselements und des Trägers in dem Spritzgießwerkzeug wird vorteilhafterweise dadurch erreicht, dass das erste Dichtungselement an dem Träger befestigt wird. Diese Befestigung des ersten Dichtungselementes an dem Träger erfolgt vorzugsweise durch Formschluss, beispielsweise an wenigstens einem Schenkel des Trägers. Insbesondere in diesem Zusammenhang ist es vorteilhaft einen im Querschnitt im Wesentlichen H-, U- oder L-förmigen Träger zu verwenden. Insbesondere bei der Verwendung eines U- oder H-förmigen Trägers kann das erste Dichtungselement in dem sich durch die Formgebung des Trägers ergebenden Zwischenraum formschlüssig festgelegt werden.

Bei einer weiteren bevorzugten Weiterbildung des Verfahrens wird eine Halteeinheit zur Halterung des Trägers und/oder des ersten Dichtungselementes in dem Hohlraum positioniert. So kann beispielsweise bei einem U-förmigen ersten Dichtungselement mit Aufnahmekanal für die Fensterscheibe die Halteeinheit im Bereich des Aufnahmekanals positioniert werden. Es kann eine sich entlang der Längsrichtung des Spritzgießwerkzeugs über die gesamte Länge erstreckende Halteeinheit oder eine Halteeinheit in Form eines Schiebers, der entlang der Längsrichtung des Spritzgießwerkzeugs während dem Einspritzen der Spritzgießmasse mitgeführt wird, eingesetzt werden.

Die erfindungsgemäße Dichtungsanordnung umfasst ein erstes Dichtungselement, ein zweites Dichtungselement und einen Träger, wobei das erste Dichtungselement formschlüssig an dem Träger festgelegt ist und das zweite Dichtungselement durch Spritzgießen stoffschlüssig mit dem Träger verbunden ist. Vorzugsweise ist diese Dichtungsanordnung mit dem oben beschriebenen Verfahren hergestellt. Eine solchermaßen hergestellte Dichtungsanordnung macht sich die Vorteile des erfindungsgemäßen Verfahrens zunutze.

Bei einer bevorzugten Ausgestaltungsform umfasst der Träger eine Außenseite und eine Innenseite, wobei das erste Dichtungselement an der Innenseite und das zweite Dichtungselement an der Außenseite angebracht sind. Diese Ausgestaltung lässt sich auf einfache Weise mit einem im Querschnitt H-, L- oder U-förmigen Träger verwirklichen. Vorzugsweise umfasst der Träger eine Ausnehmung zum formschlüssigen Hintergreifen eines Vorsprungs des ersten Dichtungselements.

In vorteilhafter Ausgestaltung erstreckt sich der Träger entlang einer Längsrichtung und das zweite Dichtungselement weist einen sich in Längsrichtung veränderlichen Querschnitt auf. Zum einen kann dieser sich veränderliche Querschnitt durch den oben erwähnten Formkern zur Ausbildung des Aufnahmekanals verursacht sein. Zum anderen kann das zweite Dichtungselement entlang der Längsrichtung abschnittsweise stoffschlüssig mit dem ersten Dichtungselement verbunden sein.

Nachfolgend wird die Erfindung unter Bezugnahme auf die Zeichnungen weiter erläutert. Dabei zeigen schematisch:
- Fig. 1: eine Seitenansicht einer Zusammenstellung mehrerer Dich- tungsprofile mit einer erfindungsgemäßen Dichtungsanordnung und einer beweglichen sowie einer feststehenden Fenster- scheibe einer Kraftfahrzeugtür;
- Fig. 2: einen Querschnitt gemäß der Linie II-II in Fig. 1 durch eine erste Ausführungsform der Dichtungsanordnung mit zusätzlicher Darstellung eines Spritzgießwerkzeuges;
- Fig. 3: ein erstes Dichtungselement der Dichtungsanordnung gemäß Fig. 1 im Querschnitt;
- Fig. 4: ein Träger der Dichtungsanordnung gemäß Fig. 1 im Quer- schnitt, und
- Fig. 5 bis 8: mehrere Querschnitte analog zu Fig. 2 mit alternativen Ausfüh- rungsformen der Dichtungsanordnung.

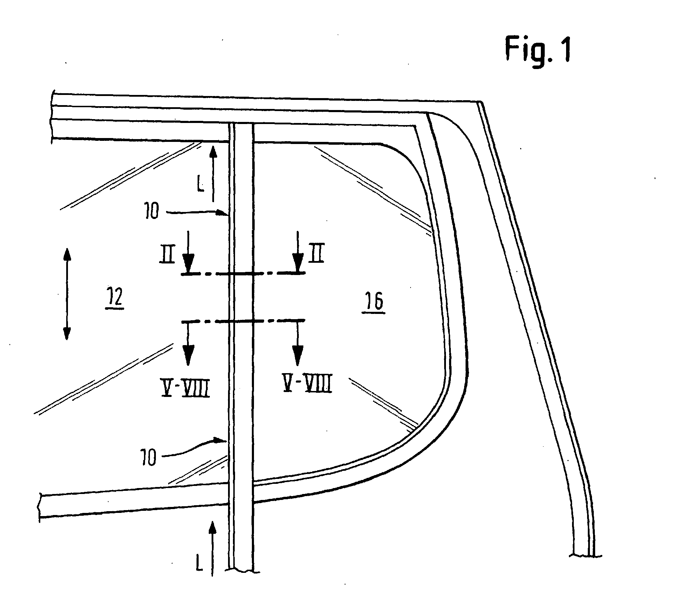

Fig. 1 zeigt eine Ansicht mehrerer Dichtungsprofile einer Kraftfahrzeugtür. Eines dieser Dichtungsprofile bildet die nachfolgend ausführlich erläuterte Dichtungsanordnung 10 zur Abdichtung und Führung einer ersten Fensterscheibe 12 sowie zur Abdichtung und Halterung einer zweiten Fensterscheibe 16. Die erste Fensterscheibe 12 ist, wie durch den Pfeil in Fig. 1 angedeutet, heb- und senkbar, wohingegen die zweite Fensterscheibe 16 feststehend ausgeführt ist. Mit anderen Worten bildet die Dichtungsanordnung 10 eine Art Halte-/Dichtungssteg zwischen den beiden Fensterscheiben 12, 16.

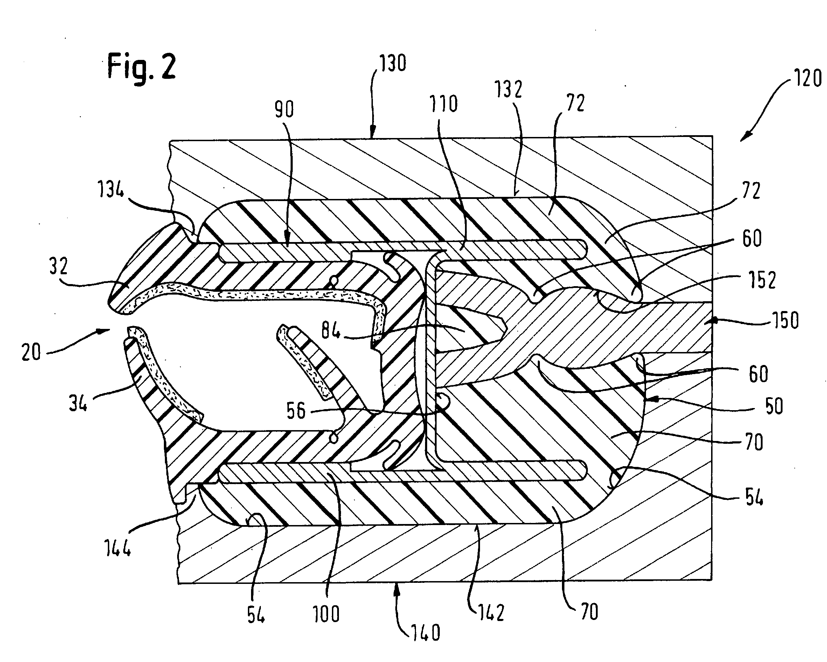

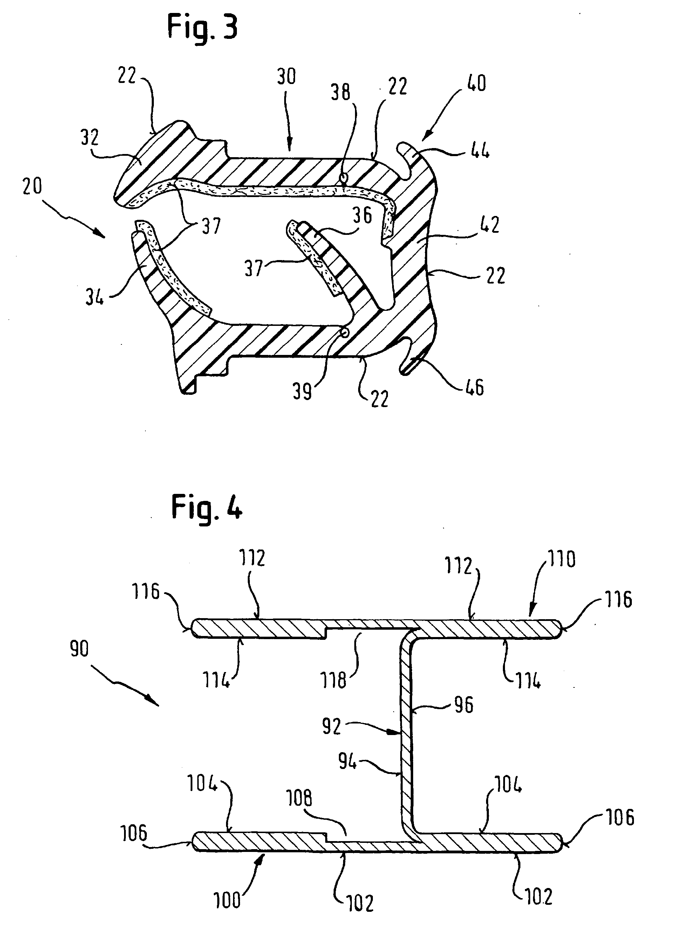

Wie aus den Querschnitten gemäß den Fig. 2 und 5 bis 8 zur erkennen, weist die Dichtungsanordnung 10 jeweils ein erstes extrudiertes Dichtungselement 20, ein zweites spritzgegossenes Dichtungselement 50 und einen Träger 90 auf. Das erste extrudierte Dichtungselement ist separat in Fig. 3 gezeigt. Fig. 4 zeigt den Träger 90 alleine.

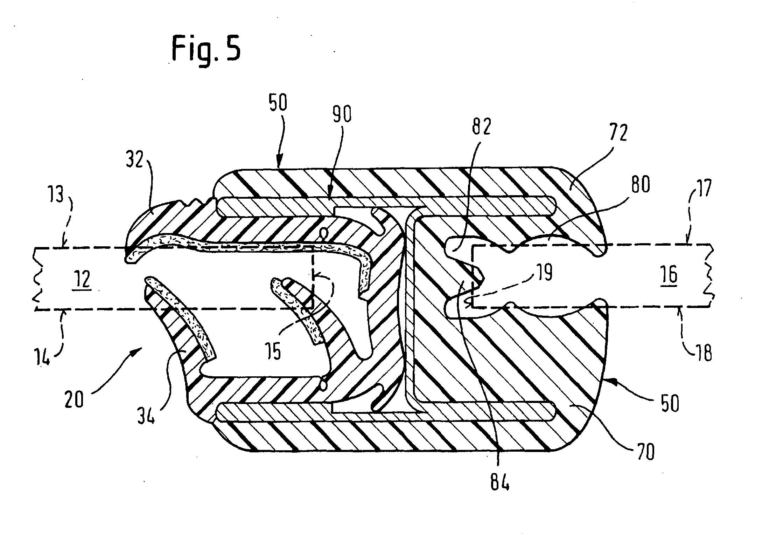

Aus einer Zusammenschau von Fig. 1 und einer der Fig. 5 bis 8 wird die gegenseitige Anordnung der Dichtungsanordnung 10 und der beiden Fensterscheiben 12, 16 ersichtlich. So dient bei allen gezeigten Ausführungsformen das erste Dichtungselement 20 zur Führung, Halterung und Abdichtung der ersten Fensterscheibe 12. Das zweite Dichtungselement 50 dient zur Halterung und Abdichtung der zweiten Fensterscheibe 16. Wie ferner aus den Querschnitten gemäß der Fig. 2, 5 bis 8 mit den angedeuteten Lagen der Fensterscheiben 12, 16 zu entnehmen ist, weist die erste Fensterscheibe 12 eine Innenfläche 13, eine Außenfläche 14 und eine Stirnfläche 15 auf. Dementsprechend weist die zweite Fensterscheibe 16 eine Innenfläche 17, eine Außenfläche 18 und eine Stirnfläche 19 auf.

Sämtliche in den Fig. 2 und 5 bis 8 dargestellte erste Dichtungselemente 20 weisen einen Dichtungsabschnitt 30 und einen Befestigungsabschnitt 40 auf. Der Dichtungsabschnitt 30 umfasst jeweils drei Dichtlippen 32, 34, 36, die jeweils mit einer Beflockung 37 versehen sind. Wie den Fig. 5 bis 8 zu entnehmen ist, kommt die Dichtlippe 32 in der späteren Einbaulage dichtend an der Innenfläche 13, die Dichtlippe 34 dichtend an der Außenfläche 14 und die Dichtlippe 36 dichtend an der Stirnfläche 15 zu liegen. Die Beflockungsschicht 37 ermöglicht eine reibungsreduzierte Führung der Fensterscheibe 12 senkrecht zur Zeichenebene der Fig. 5 bis 8.

Der Befestigungsabschnitt 40 weist im Anschlussbereich des Dichtungsabschnittes 30 eine Basis 42 auf. Von der Basis 42 ragen Vorsprünge in Form von zwei Rastschenkel 44, 46 ab, die ein formflüssiges Festlegen des ersten Dichtungselements 20 an dem Träger 90 ermöglichen. Um für das formschlüssige Befestigen des ersten Dichtungselementes 20 an dem Träger 90 eine gewisse Flexibilität bereitstellen zu können, weist der Dichtungsabschnitt 30 zwei Nuten 38, 39 auf (siehe Fig. 3). So können die beiden schenkelartigen Abschnitte des Dichtungsabschnittes 30 in einem gewissen Maß aufeinander zu bewegt werden, um so ein leichteres formschlüssiges Befestigen zu ermöglichen. In dem in den Fig. 2 und 5 bis 8 gezeigten formschlüssig befestigten Zustand des ersten Dichtungselements 20 an dem Träger 90 greifen die Rastschenkel 44, 46 in Ausnehmungen 108, 118 des Trägers 90 ein und eine Außenoberfläche 22 des ersten Dichtungselementes liegt im Bereich des Dichtungsabschnittes 30 an der Aussenseite des Trägers 90 an.

Der Träger 90 ist gemäß den Fig. 2 und 4 bis 8 (siehe insbesondere Fig. 4) H-förmig ausgebildet und umfasst einen mittleren Steg 92 mit einer ersten Seitenfläche 94 und einer zweiten Seitenfläche 96. Ferner umfasst der Träger 90 zwei im Wesentlichen rechtwinklig an den Steg 92 angeschlossene Flansche 100, 110. Der aus den beiden Flanschen 100, 110 und dem Steg 92 gebildete Träger 90 ist einstückig ausgebildet. Der Flansch 100 weist eine Außenseite 102, eine Innenseite 104 und eine Stirnfläche 106 auf. Die Ausnehmung 108 ist im Bereich der Innenseite 104 vorgesehen. Der Flansch 110 weist dementsprechend eine Außenseite 112, eine Innenseite 114 und eine Stirnfläche 116 auf. Die Ausnehmung 118 ist an der Innenseite 114 vorgesehen.

Das gemäß des weiter unten noch zu erläuternden Verfahrens hergestellte zweite Dichtungselement 50 weist eine an den Flanschen 100, 110 stoffschlüssig befestigte Innenfläche 56 sowie eine Außenfläche 54 auf. Die Außenfläche 54 und die Innenfläche 56 bilden eine Umrissfläche 52 des zweiten Dichtungselements 50.

Ferner umfasst das zweite Dichtungselement 50 einen ersten Befestigungsabschnitt 70, der an dem Flansch 100 stoffschlüssig befestigt ist und einen zweiten Befestigungsabschnitt 72, der an dem Flansch 110 stoffschlüssig befestigt ist. Das zweite Dichtungselement 50 weist ferner einen Kanal 80 zur Aufnahme der zweiten Fensterscheibe 16 auf. Die den Kanal 80 umgebenden Bereiche des zweiten Dichtungselements 50 dienen somit zugleich als Dichtungsabschnitt 60. Dieser Dichtungsabschnitt 60 ist derart ausgestaltet, dass die zweite Fensterscheibe 16 in den Kanal 80 eingeführt werden kann und dort über den Dichtungsabschnitt 60 ausreichend abgedichtet und dauerhaft festgelegt ist. Über die beiden Befestigungsabschnitte 70, 72 ist die Fensterscheibe 16 an dem Träger 90 gehalten.

Wie aus einer Zusammenschau der Fig. 2 und 5 bis 8 unter Berücksichtigung der jeweiligen Lage der Querschnitte (siehe Fig. 1) ersichtlich, weist der Kanal 80 entlang der Längsrichtung L der Dichtungsanordnung 10 eine im Querschnitt veränderlich geformte Erhebung 84 auf. Diese Erhebung 84 gestaltet einen Grund 82 des Kanals 80. Entlang der Längsrichtung L liegt die Erhebung 84 vollflächig an der Seitenfläche 96 des Trägers 90 an. In Richtung senkrecht zu dem Steg 92 ausgehend von der Seitenfläche 96 variiert die Höhe der Erhebung 84 entlang der Längsrichtung L. Diese Formgebung der Erhebung 84 ergibt sich aus dem im Folgenden näher erläuterten Herstellungsverfahren.

Zur Herstellung der Dichtungsanordnung 10 wird ein Spritzgießwerkzeug 120 mit zwei Werkzeugteilen 130, 140 verwendet (siehe Fig. 2). Der Einfachheit halber wurde in den Fig. 5 bis 8 auf die Darstellung des Spritzgießwerkzeuges 120 und insbesondere der Werkzeugteile 130, 140 verzichtet. Bei diesen Ausführungsformen ist das Spritzgießwerkzeug 120 beziehungsweise sind die Werkzeugteile 130, 140 im Wesentlichen entsprechend wie in Fig. 2 ausgebildet und angeordnet. Bei allen Ausführungsformen des Spritzgießwerkzeuges 120 weisen die Werkzeugteile 130, 140 jeweils eine Innenfläche 132, 142 und einen Vorsprung 134, 144 auf. Die Innenflächen 132, 142 stellen einen Hohlraum bereit. Wie ein Vergleich der Fig. 5 bis 8 zeigt, können Werkzeugteile 130, 140 mit unterschiedlich geformten Innenflächen 132, 142 verwendet werden, um wahlweise eine stoffschlüssige Anbindung des zweiten Dichtungselementes 50 an das erste Dichtungselement 20 zu erreichen. Die Vorsprünge 134, 144 können auch mit Rillen versehen sein (siehe Fig. 5), um einen Austrieb der verdrängten Luft an dieser Stelle zu vermeiden. Ferner umfasst das Spritzgießwerkzeug 120 einen Formkern 150 mit einer Außenfläche 152 zur Ausbildung des Kanals 80 und der Erhebung 84.

In einem ersten Schritt wird das erste Dichtungselement 20 formschlüssig an dem Träger 90 befestigt. Hierzu werden die beiden Schenkel des Dichtungsabschnittes 30 über die Nuten 38, 39 leicht zusammen gedrückt und das erste Dichtungselement 20 in den durch die Flansche 100, 110 und den Steg 92 gebildeten Freiraum eingedrückt. In der Endlage gemäß Fig. 2 berührt die Außenseite der Basis 42 die erste Seitenfläche des Stegs 92 zumindest abschnittsweise und die beiden Rastschenkel 44, 46 rasten in den Ausnehmungen 108, 118 ein. In dieser Lage ist das erste Dichtungselement 20 formschlüssig an dem Träger 90 festgelegt.

Diese Zusammenstellung wird nun innerhalb des Spritzgießwerkzeuges 120 in dem Hohlraum in einer vorbestimmten Lage positioniert, so dass der verbleibende Hohlraum die vorbestimmte Form des herzustellenden zweiten Dichtungselements 50 hat. Mit anderen Worten wird der durch die Innenflächen 132, 142 begrenzte ursprüngliche Hohlraum um das Volumen von Träger 90 und erstem Dichtungselement 20 reduziert. Um eine gesicherte Lage der Zusammenstellung 50, 90 zu erreichen, trägt einerseits das erste Dichtungselement 20 bei, welches mit den Dichtlippen 32, 34 zumindest abschnittsweise dichtend an den Innenflächen 132, 142 der Werkzeugteile 130, 140 anliegt. Für diese abdichtende Anlage sorgen auch die beiden Vorsprünge 134, 144 der Werkzeugteile 130, 140. Um eine weitere Fixierung des ersten Dichtungselements 20 an dem Träger 90 und/oder den Werkzeugteilen 130, 140 zu gewährleisten, kann alternativ zusätzlich eine Halteeinheit oder ein Schieber in dem Hohlraum positioniert werden und zwar in der in den Fig. 5 bis 8 angedeuteten Lage der späteren Fensterscheibe 12. Zu diesem Zweck weist die Halteeinheit geeignete Abmessungen auf, insbesondere hinsichtlich der Breite, so dass das erste Dichtungselement 20 und insbesondere der Dichtungsabschnitt 30 mit den Dichtlippen 32, 34 ausreichend stark an die Außenflächen 102, 112 und die Stirnflächen 106, 116 der Flansche 100, 110 gedrückt werden, so dass die Spritzgießmasse nur den vorbestimmten Hohlraum ausfüllt.

In dem Bereich zwischen den Innenseiten 104, 114 und der Seitenfläche 96 wird ein die Form eines zweiten Dichtungselements 50 mitbestimmender Formkern 150 derart in dem Spritzgießwerkzeug 120 positioniert, dass der Kanal 80 geformt werden kann. Wie eine Zusammenschau der Fig. 2 und 5 bis 8 zeigt, weist der Formkern 150 entlang der Längsrichtung L, die der Fortschrittsrichtung des Spritzgießprozesses entspricht, einen veränderlichen Querschnitt auf, so dass die Erhebung 84 ausgebildet werden kann. Mit anderen Worten liegt der Formkern 150 entlang der Längsrichtung L betrachtet nur abschnittsweise oder punktuell an der Seitenfläche 96 an.

Auf diese Weise wird auf der in Fig. 2 rechten Seite durch die Positionierung des Formkerns 150 ein ausreichender Halt für den Träger 90 und das erste Dichtungselement 20 im Inneren des Spritzgießwerkzeuges 120 und auf der in Fig. 2 linken Seite ein ausreichender Halt für den Träger 90 und das erste Dichtungselement 20 durch das erste Dichtungselement 20 erreicht. Nachfolgend wird die aus einem elastomeren Werkstoff bestehende Spritzgießmasse in den Hohlraum eingebracht und das zweite Dichtungselement 50 geformt. Die Spritzgießmasse und damit das zweite Dichtungselement geht eine stoffschlüssige Verbindung mit dem Träger 90 ein. Wie in den Fig. 5 bis 8 zu erkennen, kann bereichsweise auch eine stoffschlüssige Verbindung zwischen dem zweiten Dichtungselement 50 und dem ersten Dichtungselement 20 erfolgen, beispielsweise im Bereich der Dichtlippen 32, 34. Alternativ kann aber auf eine stoffschlüssige Verbindung von erstem Dichtungselement 20 und zweitem Dichtungselement 50 verzichtet werden.

Nach vollständigem Einbringen der Spritzgießmasse und Ausbildung des zweiten Dichtungselements 50 entlang der gewünschten Länge wird die Spritzgießmasse vulkanisiert, und die fertige Dichtungsanordnung 10 kann aus dem Spritzgießwerkzeug 120 entnommen werden.

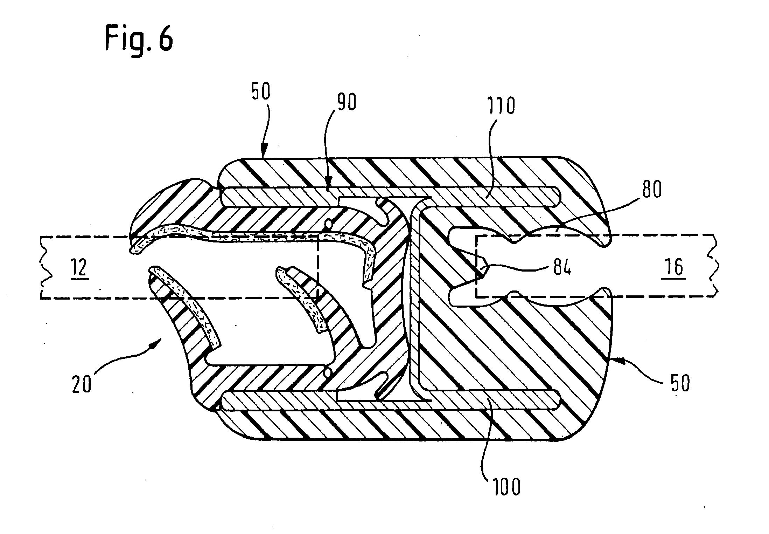

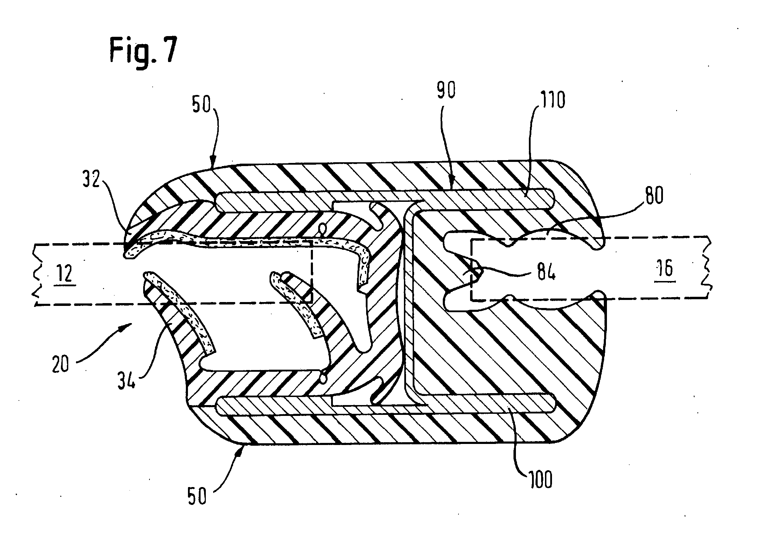

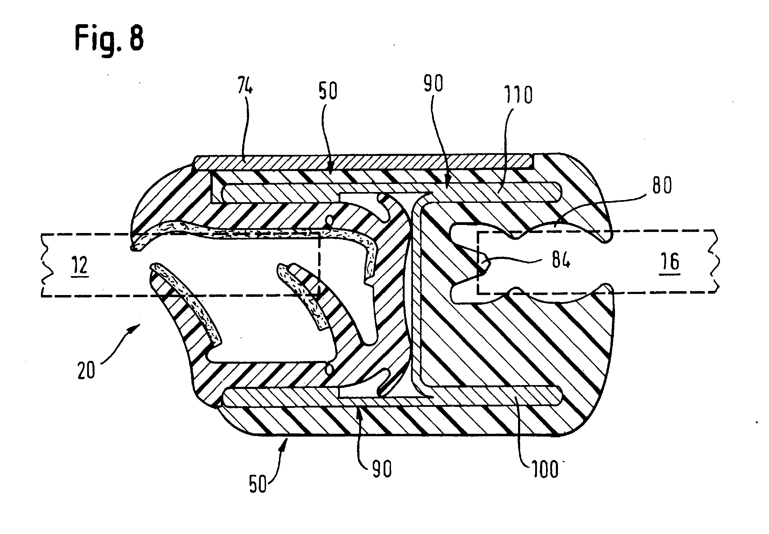

Wie bereits oben erläutert, liegt der Unterschied der verschiedenen Ausgestaltungsformen der Dichtungsanordnungen 10 in den Figuren 2 und 5 bis 8 im Wesentlichen in der Form des zweiten Dichtungselementes 50 und dessen eventuelle Anbindung an das erste Dichtungselement 20. So ist in Fig. 5 die stoffschlüssige Anbindung von zweiten Dichtungselement 50 an das erste Dichtungselement 20 im Bereich der Dichtlippen 32, 34 andersartig geformt. Die Dichtlippen 32, 34 weisen an ihrer Aussenseite Rillen zum Eingriff mit den entsprechend geformten Vorsprüngen 134, 144 der Werkzeugteile 130, 140 auf. Fig. 6 zeigt hierzu eine weitere alternative Anbindung. In Fig. 7 sind die Dichtlippen 32, 34 weitgehend mit der Spritzgießmasse überspritzt. So lässt sich eine verbesserte Befestigung der Dichtungselemente 20, 50 untereinander sowie an dem Träger 90 erreichen. In Fig. 8 weist das zweite Dichtungselement eine aufgeklebte Blende 74 auf.

Das beschriebene Verfahren zur Herstellung der Dichtungsanordnung 10 zeichnet sich insbesondere dadurch aus, dass die beiden Dichtungselemente 20, 50 auf einfache Weise mit dem Träger 90 verbunden werden können, so dass eine komplexe Dichtungsanordnung 10 zur Halterung und Abdichtung sowohl der beweglichen Fensterscheibe 12 als auch der feststehenden Fensterscheibe 16 in einem wenige Arbeitsschritte umfassenden Verfahren erzeugt werden kann. Da nur ein Arbeitsgang erforderlich ist, wird eine Reduzierung des Zeit- und Personalaufwands erreicht. In Folge des Spritzgießprozesses wird eine geeignete und dauerhafte Befestigung des zweiten Dichtungselements 50 an dem Träger 90 geschaffen. Ferner entfällt das nachträgliche Zusammenbauen von Träger 90 und den Dichtungselementen 20, 50 erst bei der Endmontage. So kann die Dichtungsanordnung 10 bereits fertig hergestellt geliefert und auf einfache Weise an der Kraftfahrzeugtür montiert werden.

### Bezugszeichenliste

- 10: Dichtungsanordnung
- 12: erste Fensterscheibe
- 13: Innenfläche
- 14: Außenfläche
- 15: Stirnfläche
- 16: zweite Fensterscheibe
- 17: Innenfläche
- 18: Außenfläche
- 19: Stirnfläche

- 20: erstes Dichtungselement
- 22: Außenoberfläche

- 30: Dichtungsabschnitt
- 32: Dichtlippe
- 34: Dichtlippe
- 36: Dichtlippe
- 37: Beflockung
- 38: Nut
- 39: Nut

- 40: Befestigungsabschnitt
- 42: Basis
- 44: Rastschenkel
- 46: Rastschenkel

- 50: zweites Dichtungselement
- 52: Umrissfläche
- 54: Außenfläche
- 56: Innenfläche

- 60: Dichtungsabschnitt

- 70: erster Befestigungsabschnitt
- 72: zweiter Befestigungsabschnitt
- 74: Blende

- 80: Kanal
- 82: Grund
- 84: Erhebung

- 90: Träger
- 92: Steg
- 94: erste Seitenfläche
- 96: zweite Seitenfläche

- 100: Flansch
- 102: Aussenseite
- 104: Innenseite
- 106: Stirnfläche
- 108: Ausnehmung

- 110: Flansch
- 112: Aussenseite
- 114: Innenseite
- 116: Stirnfläche
- 118: Ausnehmung

- 120: Spritzgießwerkzeug

- 130: Werkzeugteil
- 132: Innenfläche
- 134: Vorsprung

- 140: Werkzeugteil
- 142: Innenfläche
- 144: Vorsprung

- 150: Formkern
- 152: Außenfläche

- L: Längsrichtung

## Patentansprüche

1. Verfahren zur Herstellung einer Dichtungsanordnung (10), insbesondere für ein Kraftfahrzeug, die ein erstes Dichtungselement (20), ein zweites Dichtungselement (50) und einen Träger (90) aufweist, wobei das Verfahren folgende Schritte umfasst:
a. Positionieren des ersten Dichtungselementes (20), des Trägers (90) und eines Formkerns (150) in einem Hohlraum eines Spritzgießwerkzeuges (120);
b. Einbringen einer Spritzgießmasse in den Hohlraum derart, dass das zweite Dichtungselement (50) geformt und zumindest mit dem Träger (90) verbunden wird;
wobei durch den Formkern (150) während des Spritzgießens ein Aufnahmekanal (80) in dem zweiten Dichtungselement (50) gebildet wird;
wobei die Außenfläche (152) des Formkerns (150) so ausgestaltet ist, dass im Bereich des Grundes (82) des Aufnahmekanals (80) durch das Spritzgießen eine Erhebung (84) gebildet wird, die als Anschlag für eine in den Aufnahmekanal (80) eingeführte Fensterscheibe (16) dient, und
wobei der Formkern (150) zum Halten des Trägers (90) in dem Spritzgießwerkzeug (120) wenigstens abschnittsweise an den Träger (90) angelegt wird;
c. Vulkanisieren der Spritzgießmasse und
d. Entnehmen der Dichtungsanordnung (10) aus dem Spritzgießwerkzeug (120).

2. Verfahren nach Anspruch 1, **dadurch gekennzeichnet, dass** die Spritzgießmasse im Schritt b) derart eingebracht wird, dass das zweite Dichtungselement (50) zusätzlich mit dem ersten Dichtungselement (20) verbunden wird.

3. Verfahren nach Anspruch 1 oder 2, **dadurch gekennzeichnet, dass** das erste Dichtungselement (20) an dem Träger (90) vorzugsweise formschlüssig befestigt wird.

4. Verfahren nach einem der Ansprüche 1 bis 3, **dadurch gekennzeichnet, dass** eine Halteeinheit (12) zur Halterung des Trägers (90) und/oder des ersten Dichtungselements (20) in dem Hohlraum des Spritzgießwerkzeugs (120) positioniert wird.

5. Verfahren nach einem der Ansprüche 1 bis 5, **dadurch gekennzeichnet, dass** die Außenfläche (152) des Formkerns (150) so ausgestaltet ist, dass durch das Spritzgießen wenigstens zwei Erhebungen (60) gebildet wird, die zum Abdichten und Festlegen einer in den Aufnahmekanal (80) eingeführten Fensterscheibe (16) dienen.

6. Verfahren nach einem der Ansprüche 1 bis 6, **dadurch gekennzeichnet, dass** das erste Dichtungselement (20) vor dem Schritt a) durch Extrusion gefertigt wird.

7. Dichtungsanordnung, insbesondere für ein Kraftfahrzeug, umfassend:
ein erstes Dichtungselement (20),
ein zweites Dichtungselement (50) und
einen Träger (90),
wobei das erste Dichtungselement (20) formschlüssig an dem Träger (90) festgelegt und das zweite Dichtungselement (50) durch das Spritzgießen stoffschlüssig mit dem Träger (90) verbunden ist
**dadurch gekennzeichnet, dass** das zweite Dichtungselement (50) mit einem Aufnahmekanal (80) und wenigstens einer Erhebung (84), die im Bereich des Grundes (82) des Aufnahmekanals (80) gebildet ist und als Anschlag für eine in den Aufnahmekanal (80) eingeführte Fensterscheibe (16) dient, versehen ist.

8. Dichtungsanordnung nach Anspruch 7, **dadurch gekennzeichnet, dass** das zweite Dichtungselement (50) mit wenigstens zwei Erhebungen (60), die zum Abdichten und Festlegen einer in den Aufnahmekanal (80) eingeführten Fensterscheibe (16) dienen, versehen ist

9. Dichtungsanordnung nach Anspruch 7 oder 8, **dadurch gekennzeichnet, dass** der Träger (90) eine Außenseite (102, 112) und eine Innenseite (104, 114) umfasst, wobei das erste Dichtungselement (20) an der Innenseite (104, 114) und das zweite Dichtungselement (50) an der Außenseite (102, 112) angebracht ist.

10. Dichtungsanordnung nach einem der Ansprüche 7 bis 9, **dadurch gekennzeichnet, dass** das erste Dichtungselement (20) und das zweite Dichtungselement (50) durch das Spritzgießen stoffschlüssig miteinander verbunden sind.

11. Dichtungsanordnung nach einem der Ansprüche 7 bis 10, **dadurch gekennzeichnet, dass** das erste Dichtungselement (20) wenigstens einen Vorsprung (44, 46) und der Träger (90) wenigstens eine Ausnehmung (108, 118) zum formschlüssigen Hintergreifen des Vorsprunges (44, 46) aufweist.

12. Dichtungsanordnung nach einem der Ansprüche 7 bis 11, **dadurch gekennzeichnet, dass** das erste Dichtungselement (20) mit zwei Nuten (38, 39) versehen ist.

13. Dichtungsanordnung nach einem der Ansprüche 7 bis 12, **dadurch gekennzeichnet, dass** sich der Träger (90) entlang einer Längsrichtung (L) erstreckt und das zweite Dichtungselement (50) einen sich in Längsrichtung (L) veränderlichen Querschnitt aufweist.

14. Dichtungsanordnung nach einem der Ansprüche 7 bis 13, **dadurch gekennzeichnet, dass** der Träger (90) im Querschnitt H-, L- oder U-förmig ausgebildet ist.

15. Dichtungsanordnung nach einem der Ansprüche 7 bis 14, **dadurch gekennzeichnet, dass** das erste Dichtungselement (20) einen Dichtungsabschnitt (30) für eine bewegbare Fensterscheibe (12) aufweist, der mit drei Dichtlippen (32, 34, 36) versehen ist,
wobei die Dichtlippen (32, 34, 36) mit einer Beflockung (37) versehen sind, die sich entlang einer der Seitenflächen (13) der Fensterscheibe (12) bis in einen der Stirnfläche (15) der Fensterscheibe (12) gegenüberliegenden Bereich des ersten Dichtungselements (20) erstreckt, und
wobei vorzugsweise die Dichtlippen (32, 34) an ihrer Außenseite mit Rillen versehen sind.

16. Dichtungsanordnung nach einem der Ansprüche 7 bis 15, **dadurch gekennzeichnet, dass** das zweite Dichtungselement (50) mit einer aufgeklebten Blende (74) versehen ist.

## Claims

1. Method for producing a sealing arrangement (10), particularly for a motor vehicle, having a first sealing element (20), a second sealing element (50) and a carrier (90), wherein the method comprises the following steps:
(a) positioning of the first sealing element (20), the carrier (90) and a mould core (150) into the hollow space of a injection mould (120);
(b) introduction of an injection moulding mass into the hollow space in such a way that the second sealing element (50) is shaped and is bonded at least with the carrier (90);
wherein the mould core (150) induces the formation of a receiving channel (80) in the second sealing element (50) during the injection process;
wherein the outer surface (152) of the mould core (150) is so designed that in the area of the bottom (82) of the receiving channel (80) a protrusion (84) is formed during the injection process which serves as a buffer for a window pane (15) introduced into the receiving channel (80);
wherein the mould core (150) abuts against the carrier (90) at least over sections to hold the carrier (90) in the injection tool (120);
(c) vulcanisation of the injection mass and
(d) removal of the sealing arrangement (10) from the injection tool (120).

2. Method according to claim 1 **characterised in that** the injection mass is introduced in such a way in Step (b) that the second sealing element (50) is also connected to the first sealing element (20).

3. Method according to claim 1 or 2 **characterised in that** the first sealing element (20) is preferably positively connected to the carrier (90).

4. Method according to one of the claims 1 to 3 **characterised in that** a holding unit (12) is positioned in the injection tool (150) for holding the carrier (90) and/or the first sealing element (20) in the hollow space of the injection tool (120).

5. Method according to one of the claims 1 to 4 **characterised in that** the outer surface (152) of the mould core (150) is so configured that in the course of the injection process at least two projections (60) are formed which serve to seal and to secure a window pane (16) introduced into the receiving channel (80).

6. Method according to one of the claims 1 to 5 **characterised in that** the first sealing element (20) is manufactured by extrusion prior to Step (a).

7. Sealing arrangement in particular for a motor vehicle, comprising a first sealing element (20)
a second sealing element (50) and
a carrier (90)
wherein the first sealing element (20) is positively secured to the carrier (90) and the second sealing element (50) is bonded to the carrier (90) by means of injection moulding **characterised in that** the second sealing element (50) is provided with a receiving channel (80) and at least one projection (84) which is formed in the bottom (82) of the receiving channel (80) and which serves as a buffer for a window pane (16) introduced into the receiving channel (80).

8. Sealing arrangement according to claim 7 **characterised in that** the second sealing element (50) is provided with at least two projections (60) serving to seal and secure a window pane (16) introduced into the receiving channel (80)

9. Sealing arrangement according to claim 7 or 8 **characterised in that** the carrier (90) has an outer surface (102, 112) and an inner surface (104, 114) wherein the first sealing element (20) is positioned on the inner surface (104, 114) and the second sealing element (50) is positioned on the outer surface (102, 112).

10. Sealing arrangement according to one of the claims 7 to 9 **characterised in that** the first sealing element (20) and the second sealing element (50) are positively connected to each other by means of injection moulding.

11. Sealing arrangement according to one of the claims 7 to 10 **characterised in that** the first sealing element (20) is provided with at least one projection (44, 46) and the carrier (90) is provide with at least one recess (108, 118) in which the said projection (44, 46) can engage and lock positively.

12. Sealing arrangement according to one of the claims 7 to 11 **characterised in that** the first sealing element (20) is provided with two slots (38, 39).

13. Sealing arrangement according to one of the claims 7 to 12 **characterised in that** the carrier (90) extends along the longitudinal axis (L) and that the second sealing element (50) has a cross-section which changes along the longitudinal axis (L).

14. Sealing arrangement according to one of the claims 7 to 13 **characterised in that** the carrier (90) has an H-, L- or U-shaped cross-section.

15. Sealing arrangement according to one of the claims 7 to 14 **characterised in that** the first sealing element (20) has a sealing section (30) for a movable window pane (12) which is provided with three sealing lips (32, 34, 36),
wherein the sealing lips (32, 34, 36) have a flocking coating (37) extending along an area of the first sealing element (20) that faces the side surface (13) of the window pane (12) to an area that faces the end face (15) of the window pane (12), and
wherein preferably the sealing lips (32, 34) are provided with grooves on their outer surface.

16. Sealing arrangement according to one of the claims 7 to 15 **characterised in that** the second sealing element (50) has a covering (74) glued onto it.

## Revendications

1. Procédé pour la fabrication d'un agencement d'étanchéité (10), en particulier pour un véhicule automobile, qui comprend un premier élément d'étanchéité (20), un second élément d'étanchéité (50) et un support (90), le procédé comprenant les étapes suivantes :
a) positionnement du premier élément d'étanchéité (20), du support (90) et d'un noyau de moulage (150) dans une cavité d'un outil de moulage par injection (120) ;
b) introduction d'une masse de moulage par injection dans la cavité de telle façon que le second élément d'étanchéité (50) est mis en forme et au moins relié au support (90) ;
de telle sorte qu'un canal de réception (80) est formé pendant le moulage par injection par le noyau de moulage (150) dans le second élément d'étanchéité (50) ;
la surface extérieure (152) du noyau de moulage (150) étant réalisée de telle façon que, dans la zone du fond (82) du canal de réception (80) une surélévation (84) est formée par le moulage par injection, laquelle sert de butée pour une vitre de fenêtre (16) introduite dans le canal de réception (80), et
le noyau de moulage (150) étant appliqué au moins par tronçons contre le support (90) pour le maintien du support (90) dans l'outil de moulage (120) par injection ;
c) vulcanisation de la masse de moulage par injection, et
d) enlèvement de l'agencement d'étanchéité (10) hors de l'outil de moulage par injection (120).

2. Procédé selon la revendication 1, **caractérisé en ce que** la masse de moulage par injection est introduite à l'étape b) de telle façon que le second élément d'étanchéité (50) est additionnellement relié au premier élément d'étanchéité (20).

3. Procédé selon la revendication 1 ou 2, **caractérisé en ce que** le premier élément d'étanchéité (20) est fixé sur le support (90), de préférence par coopération de formes.

4. Procédé selon l'une des revendications 1 à 3, **caractérisé en ce qu'**une unité de maintien (12) destinée au maintien du support (90) et/ou du premier élément d'étanchéité (20) est positionnée dans la cavité de l'outil de moulage par injection (120).

5. Procédé selon l'une des revendications 1 à 5, **caractérisé en ce que** la surface extérieure (152) du noyau de moulage (150) est réalisée de telle façon qu'au moins deux surélévations (60) sont formées par le moulage par injection, lesquelles servent à étancher et à immobiliser une vitre de fenêtre (16) introduite dans le canal de réception (80).

6. Procédé selon l'une des revendications 1 à 5, **caractérisé en ce que** le premier élément d'étanchéité (20) est fabriqué par extrusion avant l'étape a).

7. Agencement d'étanchéité, en particulier pour un véhicule automobile, comprenant :
un premier élément d'étanchéité (20),
un second élément d'étanchéité (50), et
un support (90),
dans lequel le premier élément d'étanchéité (20) est immobilisé par coopération de formes sur le support (90) et le second élément d'étanchéité (50) est relié au moyen du moulage par injection en coopération de matière avec le support (90),
**caractérisé en ce que** le second élément d'étanchéité (50) et pourvu d'un canal de réception (80) et d'au moins une surélévation (84), laquelle est formée dans la région du fond (82) du canal de réception (80) et sert de butée pour une vitre de fenêtre (16) introduite dans le canal de réception (80).

8. Agencement d'étanchéité selon la revendication 7, **caractérisé en ce que** le second élément d'étanchéité (50) est pourvu d'au moins deux surélévations (60), qui servent à étancher et à immobiliser une vitre de fenêtre (16) introduite dans le canal de réception (80).

9. Agencement d'étanchéité selon la revendication 7 ou 8, **caractérisé en ce que** le support (90) comprend un côté extérieur (102, 112) et un côté intérieur (104, 114), le premier élément d'étanchéité (20) étant appliqué contre le côté intérieur (104, 114) et le second élément d'étanchéité (50) étant appliqué contre le côté extérieur (102, 112).

10. Agencement d'étanchéité selon l'une des revendications 7 à 9, **caractérisé en ce que** le premier élément d'étanchéité (20) et le second élément d'étanchéité (50) sont reliés l'un à l'autre en coopération de matière en raison du moulage par injection.

11. Agencement d'étanchéité selon l'une des revendications 7 à 10, **caractérisé en ce que** le premier élément d'étanchéité (20) comprend au moins une saillie (44, 46) et le support (90) comprend au moins un creux (108, 118) pour l'engagement de la saillie (44, 46) en coopération de formes.

12. Agencement d'étanchéité selon l'une des revendications 7 à 11, **caractérisé en ce que** le premier élément d'étanchéité (20) est doté de deux gorges (38, 39).

13. Agencement d'étanchéité selon l'une des revendications 7 à 12, **caractérisé en ce que** le support (90) s'étend le long d'une direction longitudinale (L) et le second élément d'étanchéité (50) présente une section transversale variable en direction longitudinale (L).

14. Agencement d'étanchéité selon l'une des revendications 7 à 13, **caractérisé en ce que** le support (90) est réalisé avec une section transversale en forme de H, L ou U.

15. Agencement d'étanchéité selon l'une des revendications 7 à 14, **caractérisé en ce que** le premier élément d'étanchéité (20) comprend un premier tronçon d'étanchéité (30) pour une vitre de fenêtre mobile (12), lequel est pourvu de trois lèvres d'étanchéité (32, 34, 36),
lesdites lèvres d'étanchéité (32, 34, 36) étant pourvues d'un flocage (37) qui s'étend le long de l'une des surfaces latérales (13) de la vitre de fenêtre (12) jusque dans une région, opposée à la face frontale (15) de la vitre de fenêtre (12), du premier élément d'étanchéité (20), et
dans lequel les lèvres d'étanchéité (32, 34) sont de préférence pourvues de rainures sur leur face extérieure.

16. Agencement d'étanchéité selon l'une des revendications 7 à 15, **caractérisé en ce que** le second élément d'étanchéité (50) est pourvu d'un cache collé (74).
